# DEMANDE DE BREVET EUROPEEN

(11) **EP 4 163 903 A1**
(43) Date de publication de la demande: **12.04.2023**
(21) Numéro de dépôt: 21306389.4
(22) Date de dépôt: 05.10.2021
(51) Int. Cl.: G09B 23/30, G09B 23/32

(54) **SIMULATEUR D' ARTICULATION LIGAMENTAIRE**

(71) Demandeur: Université de Strasbourg, 67000 Strasbourg (FR)
(72) Inventeur: CHAKFE, Nabil, 67150 HINDISHEIM (FR); EHLINGER, Matthieu, 67120 DUPPIGHEIM (FR); FAVREAU, Henri, 67000 STRASBOURG (FR); LACHEGUR, Wissal, 67000 STRASBOURG (FR); NEUMANN, Nicole, 67400 ILLKIRCH GRAFFENSTADEN (FR)
(74) Mandataire: Lavoix

(57) **Abrégé**

L'invention concerne un simulateur d'articulation ligamentaire (10) comprenant :
- au moins deux os artificiels (12) ;
- pour chaque os artificiel (12), au moins un point d'ancrage (14) sur ledit os artificiel (12) ;
- au moins un ligament artificiel (16) reliant deux points d'ancrage (14) d'un os artificiel (12) différent ;
- un moyen de réglage (18) relié aux ligaments artificiels (16).

Le moyen de réglage (18) est configuré pour faire varier au moins une caractéristique biomécanique de chaque ligament artificiel (16) entre les deux points d'ancrage (14) associés, indépendamment des autres ligaments artificiels (16).

Le moyen de réglage (18) est configuré pour recevoir, pour chaque ligament artificiel (16), un signal de commande associée et pour régler automatiquement la longueur de chaque ligament artificiel (16) en fonction du signal de commande associé.

## Description

La présente invention concerne un simulateur d'articulation ligamentaire.

Par exemple, le simulateur est un simulateur de genou ligamentaire.

Un simulateur est défini comme un outil permettant une expérience sans contact avec l'événement réel. Il permet ainsi un apprentissage médical, souvent difficile dans les conditions réelles, et ne génère aucun risque pour le patient. Les erreurs commises en situation de simulation sont également l'occasion d'une correction, qui fait partie intégrante des méthodes d'apprentissage des étudiants en médecine ou en kinésithérapie par exemple.

De plus, la simulation constitue un lien entre le savoir théorique et le savoir pratique qui augmente la part des connaissances assimilées et optimise les processus d'abstraction et de conceptualisation engagés dans la mise en œuvre des compétences de généralisation et d'improvisation face à un événement.

Le premier avantage de la simulation est donc de générer une expérience sans risque pour le patient. Elle permet de modéliser l'ensemble des pathologies de l'articulation et permet également de confronter les étudiants à des situations rares dans la réalité et, ainsi, de réduire les erreurs diagnostiques et le volume d'examens complémentaires inutiles ensuite. Enfin, les exercices de simulation sont l'occasion d'une évaluation des compétences, d'une analyse des progrès de chaque étudiant et d'un retour sur expérience personnalisé.

Il existe un besoin particulier pour simuler un genou ligamentaire. En effet, les lésions ligamentaires traumatiques du genou sont des évènements fréquents mais leur diagnostic demeure difficile, particulièrement dans les services d'urgences. A titre d'exemple, l'incidence annuelle des lésions du ligament croisé antérieur est de 0,81/1000. Néanmoins, la moitié des ruptures ligamentaires est diagnostiquée à tort comme une entorse bénigne du genou. Par ailleurs, il est établi que la réalisation de deux tests diagnostiques différents est nécessaire à l'établissement d'un diagnostic précis. Or, certains tests cliniques apparaissent difficiles à mettre en œuvre et leur interprétation est souvent erronée à l'instar du pivot shift test. D'autres lésions, plus rares, constituent un véritable défi diagnostic comme les lésions du point d'angle postéro-latéral dont le diagnostic est ignoré dans près de trois quarts des cas au moment de l'examen initial. Enfin, des événements traumatiques rares comme la luxation du genou sont pourvoyeurs de complications sévères du fait d'un diagnostic souvent retardé par déficience de l'examen clinique initial. L'expérience montre qu'un étudiant en médecine ne sera confronté en moyenne qu'à cinq cas de lésions complexes durant son internat.

Afin de pallier ces erreurs de diagnostics, le recours aux examens complémentaires constitue une pratique courante en traumatologie du genou. Néanmoins, la réalisation d'examens complémentaires comme l'IRM (Image par Résonnance Magnétique) n'apporte aucun bénéfice diagnostic dans les cas simples pour un clinicien entrainé réalisant un examen clinique de qualité et représente un coût financier non négligeable.

On connait des simulateurs de genou pour étudiants en chirurgie tel que décrit par exemple dans les documents WO 2012/103871 A1 ou US 4850877. De tels simulateurs comprennent un tibia artificiel, un fémur artificiel et plusieurs ligaments artificiels vissés sur les os. Toutefois, un tel simulateur n'offre qu'un outil de simulation limité ne permettant pas de simuler finement une pathologie affectant le genou.

Ainsi, la présente invention a pour but de proposer un simulateur de genou ligamentaire permettant un réglage précis et aisé du simulateur de genou afin de simuler différents types de lésions partielles ou complètes correspondant à différentes pathologies mono- ou multi-ligamentaires.

A cet effet, l'invention a pour objet un simulateur d'articulation ligamentaire comprenant : au moins deux os artificiels ; pour chaque os artificiel, au moins un point d'ancrage sur ledit os artificiel ; au moins un ligament artificiel, le ou chaque ligament artificiel reliant deux points d'ancrage d'un os artificiel différent, et un moyen de réglage relié aux ligaments artificiels, le moyen de réglage étant configuré pour faire varier au moins une caractéristique biomécanique de chaque ligament artificiel entre les deux points d'ancrage associés, indépendamment des autres ligaments artificiels, le moyen de réglage étant configuré pour recevoir, pour chaque ligament artificiel, un signal de commande associé ; le moyen de réglage étant configuré pour régler automatiquement la longueur de chaque ligament artificiel en fonction du signal de commande associé.

Ainsi, la présente invention permet de moduler chaque ligament artificiel du simulateur de genou, indépendamment les uns des autres, pour simuler différents types de lésions partielles ou complètes correspondant à différentes pathologies mono- ou multi-ligamentaires, dont le diagnostic est difficile mais primordial et dont l'enseignement est difficile car rare. Le simulateur selon l'invention permet donc un apprentissage de qualité de l'examen clinique pour des étudiants, souvent difficile dans les conditions réelles, rare en termes de fréquence, et sans risque pour le patient.

Suivant d'autres aspects avantageux de l'invention, le simulateur comprend une ou plusieurs des caractéristiques suivantes, prise(s) isolément ou suivant toutes les combinaisons techniquement possibles :
- le simulateur ligamentaire est un simulateur de genou ligamentaire, au moins deux os artificiels étant choisi chacun parmi le groupe composé de : un fémur artificiel, un tibia artificiel, une patella artificielle et une fibula artificielle ;
- au moins deux ligaments artificiels présentent une surface de section transversale différente ;
- chaque ligament artificiel est composé d'un matériau choisi parmi le groupe constitué de : Polypropylène ; Polyamide, notamment Nylon ; Matériau élastomère ; Silicone ;
- chaque ligament artificiel est composé d'un ressort à raideur variable disposé entre les deux points d'ancrage associés ;
- le moyen de réglage comprend au moins deux dispositifs d'actionnement, notamment au moins deux moteurs pas-à-pas, chaque dispositif d'actionnement étant relié à un unique ligament artificiel et étant configuré pour faire varier la longueur dudit ligament en fonction du signal de commande associé ;
- le moyen de réglage comprend en outre un système de blocage configuré pour maintenir fixe la longueur de chaque ligament artificiel entre les deux points d'ancrage associés ;
- le système de blocage comprend un mors actionnable par au moins un dispositif motorisé, notamment un servomoteur, le mors étant propre à être actionné entre une configuration ouverte dans laquelle les ligaments artificiels sont propres à coulisser librement dans le mors et une configuration fermée dans laquelle les ligaments artificiels sont maintenus en position fixe dans le mors ;
- le simulateur comprend en outre un support fixe, au moins un os artificiel étant relié au support fixe par une liaison rotule ;
- le simulateur comprend en outre une interface homme machine, un système de commande et une base de données, la base de données comportant des données relatives à au moins un état de genou, le ou chaque état de genou étant caractérisé par une longueur prédéfinie pour chaque ligament artificiel entre les deux points d'ancrage associés; l'interface homme machine étant configurée pour acquérir une instruction associée à l'un des états de genou de la part d'un utilisateur du simulateur ; le système de commande étant configuré pour recevoir ladite instruction et pour envoyer au moyen de réglage un signal de commande pour chaque ligament artificiel correspondant à la longueur prédéfinie associée audit état de genou dans la base de données ;
- le simulateur comprend en outre au moins un accéléromètre fixé à l'un des os artificiels et une mémoire configurée pour enregistrer les mesures d'accélération effectuées par chaque accéléromètre au cours du temps ;
- le simulateur comprend en outre une enveloppe définissant un volume interne dans lequel sont arrangés les os artificiels, une mousse remplissant le volume interne.

Ces caractéristiques et avantages de l'invention apparaitront à la lecture de la description qui va suivre, donnée uniquement à titre d'exemple non limitatif, et faite en référence aux dessins annexés, sur lesquels :
**[****Fig 1****]** - la figure 1 est une représentation schématique de profil d'un simulateur d'articulation ligamentaire selon l'invention ;
**[****Fig 2****]** - la figure 2 est une vue en perspective des os artificiels et des ligaments artificiels du simulateur de la figure 1 ;
**[****Fig 3****]** - la figure 3 est une représentation schématique du moyen de réglage du simulateur de la figure 1 ; et
**[****Fig 4****]** - la figure 4 est une vue en perspective du moyen de réglage du simulateur de la figure 1.

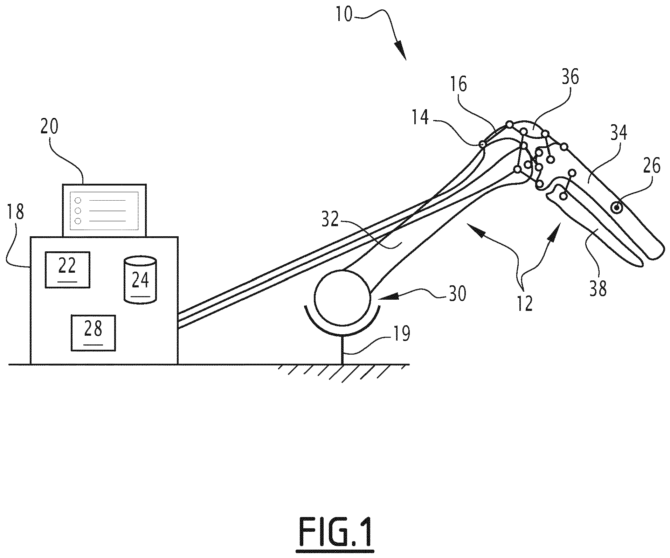

Un simulateur de genou ligamentaire 10 est représenté sur la figure 1.

Toutefois, l'homme du métier comprendra que la présente invention s'applique de manière similaire à toute articulation. Le simulateur est par exemple un simulateur d'épaule ou un simulateur de cheville.

Le simulateur 10 comprend au moins deux os artificiels 12, au moins un point d'ancrage 14 pour chaque os artificiel 12, au moins un ligament artificiel 16 et un moyen de réglage 18.

Le simulateur 10 comprend en outre avantageusement un support fixe 19, une interface homme machine 20, un système de commande 22, une base de données 24 et un accéléromètre 26.

Le simulateur 10 comprend notamment quatre os artificiels 12, à savoir un fémur artificiel 32, un tibia artificiel 34, une patella artificielle 36 et une fibula artificielle 38.

Chaque os artificiel 12 est par exemple obtenu par impression 3D.

Afin de respecter les proportions d'un genou humain, les données anatomiques de la structure osseuse et cartilagineuse d'un genou sont acquises au moyen d'un scanner superposé à une IRM réalisée sur un sujet sain. Ces données seront ensuite traitées permettant la reconstruction en trois dimensions du genou osseux et de la surface articulaire cartilagineuse. Cette reconstruction 3D sera utilisée pour l'impression du modèle de genou en polymère par une imprimante 3D.

Comme visible sur la figure 1, au moins un os artificiel 12 est relié au support fixe 19 par une liaison rotule 30. Le support fixe 19 est par exemple fixé à une table ou à un mur. En particulier, l'extrémité du fémur artificiel 32 est fixé au support fixe 19, la liaison rotule 30 agissant comme une hanche artificielle.

Chaque point d'ancrage 14 fixé sur l'un des os artificiels 12 est par exemple une boucle métallique insérée dans l'os 12. En variante, chaque point d'ancrage 14 est collé à l'os 12, vissé dans l'os 12 ou encore imprimé en 3D avec l'os 12. Ainsi, le point d'ancrage 14 constitue une liaison entre l'os et le ligament artificiel. Le point d'ancrage 14 est soit une pièce mécanique à part ou un prolongement de l'os 12.

Le simulateur 10 comprend avantageusement au moins deux ligament artificiels 16, notamment sept ligaments artificiels 16.

Chaque ligament artificiel 16 relie deux points d'ancrage 14 d'un os artificiel 12 différent.

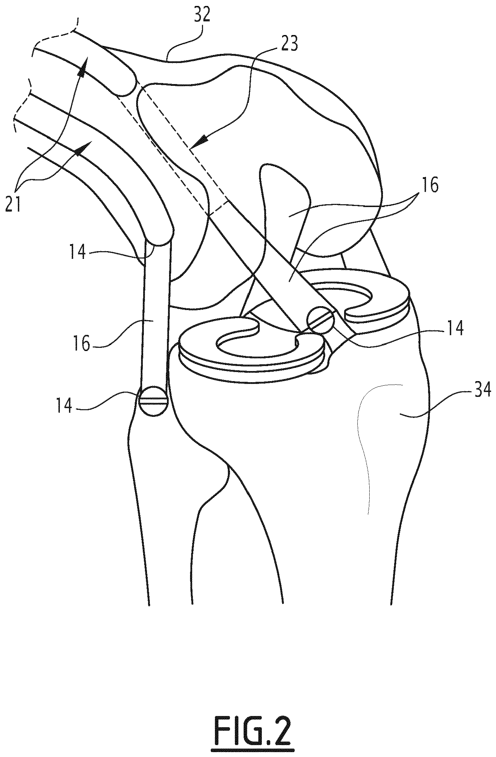

Comme visible sur la figure 2, chaque ligament artificiel 16 est avantageusement propre à coulisser au moins en partie dans une gaine 21 et/ou un tunnel 23 creusé dans l'un des os artificiels 12.

Par exemple, comme représenté sur la figure 2, le ligament croisé antérieur artificiel est fixé entre le fémur artificiel 32 (au niveau de la face médiale du condyle latéral, postérieur au sillon intercondylien latéral) et le tibia artificiel 34 (au niveau du versant antérolatéral de l'épine tibiale médiale). Il est propre à faire opposition à la translation antérieure du tibia 34 par rapport au fémur 32 (mouvement de "tiroir antérieur") et à la rotation interne excessive du tibia 34 par rapport au fémur 32. Le ligament antéro-latéral est fixé entre le fémur artificiel 32 (au niveau de l'épicondyle latéral) et du tibia artificiel 34 (au niveau de la partie latérale et proximale, postérieur au tubercule de Gerdy). Il est propre à permettre le contrôle de la rotation tibial interne et du ressaut rotatoire.

Chaque ligament artificiel 16 est avantageusement un cordon de section transversale ronde. En variante, chaque ligament artificiel 16 est un bandeau de section transversale rectangulaire, ovale ou oblongue.

Chaque ligament artificiel 16 présente une dimension transversale (ou diamètre lorsque la section est ronde) propre. Ainsi, avantageusement au moins deux ligaments artificiels 16 présentent une dimension transversale différente et une surface de section transversale différente.

A titre d'exemple, le ligament croisé antérieur est un cordon de diamètre 4 mm et présente donc une section de 12.6 mm². Le ligament collatéral médial est un cordon de diamètre 2,5 mm et présente donc une section de 4,91 mm². Le point d'angle postéro-latéral est un cordon de diamètre 3 mm et présente donc une section de 7,07 mm².

Il est à noter que le point d'angle constitué d'un ensemble de structures ligamentaires est ici modélisé par une seule structure.

Chaque ligament artificiel 26 est composé d'un matériau choisi parmi le groupe constitué de : Polypropylène, un matériau élastomère comme le Caoutchouc, Silicone, Polyamide, notamment Nylon.

Ces matériaux permettent de simuler le ligament artificiel 16 en offrant une certaine extensibilité et reproduisent en particulier la rupture du ligament à une force donnée. Les matériaux sont sélectionnés notamment sur la base de leur élasticité et de la contrainte maximale avant rupture afin qu'ils correspondent aux ligaments réels.

A titre d'exemple, le ligament croisé antérieur est un cordage de 4 mm de diamètre en polypropylène. Le ligament croisé postérieur est un cordage de 5 mm de diamètre en polypropylène. Le ligament collatéral médial est cordage de 2,5 mm de diamètre en nylon. Le ligament collatéral latéral est cordage de 1,5 mm de diamètre en nylon. Le point d'angle postero-latéral est un cordage de 3 mm de diamètre en nylon. Le point d'angle postero-médial est un cordage de 1,5 mm de diamètre en nylon. Le ligament antéro latéral est un cordage de 1 mm de diamètre en nylon.

Le moyen de réglage 18 est relié aux ligaments artificiels 16.

En particulier, chaque ligament artificiel 16 est relié de manière fixe à l'un des points d'ancrage 14 à une extrémité, est propre à coulisser dans l'autre point d'ancrage 14 et peut être avantageusement fixé à un cordage indéformable 40 à son autre extrémité. En variante, le ligament artificiel 16 est fixé directement au moyen de réglage 18.

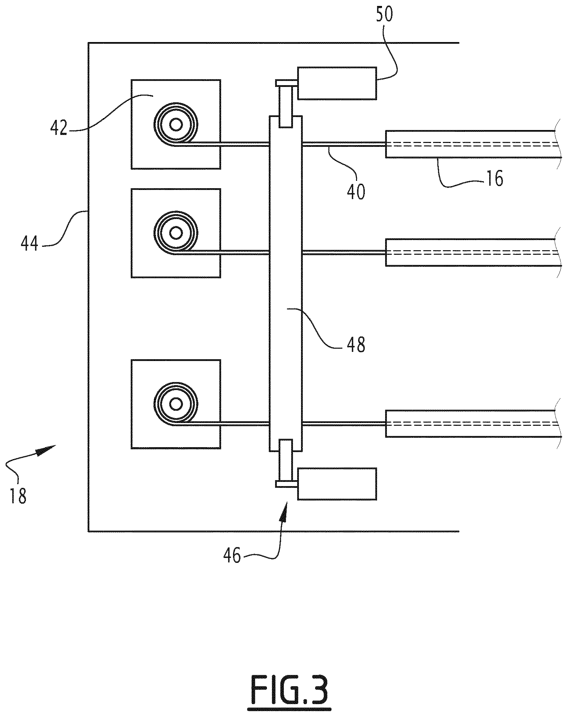

Ainsi, comme visible sur la figure 3, chaque cordage indéformable 40 est disposé entre le moyen de réglage 18 et le ligament artificiel 16 associé.

Le simulateur 10 comprend en outre avantageusement des ligaments fixes non modulables au sens où ils sont fixés entre deux points d'ancrage sans possibilité de faire varier leur longueur. A titre d'exemple, le ligament patellaire et le tendon du quadriceps peuvent être simulés de manière non modulable.

Le moyen de réglage 18 est configuré pour faire varier la longueur de chaque ligament artificiel 16 entre les deux points d'ancrage 14 associés, indépendamment de la longueur des autres ligaments artificiels 16. Ainsi, le moyen de réglage 18 est configuré pour faire varier la longueur de l'un des ligaments artificiels 16 entre les deux points d'ancrage 14 associés sans faire varier les autres longueurs des autres ligaments artificiels 16.

Avantageusement, le moyen de réglage 18 comprend au moins deux dispositifs d'actionnement 42. En particulier, le moyen de réglage 18 comprend un dispositif d'actionnement 42 associé à chaque ligament artificiel 16. Chaque dispositif d'actionnement 42 est ainsi relié à un unique ligament artificiel 16 par souci de simplicité et est configuré pour faire varier la longueur dudit ligament artificiel 16.

Chaque dispositif d'actionnement 42 est un moteur, en particulier un moteur pas-à-pas.

En variante du moteur pas-à-pas fixé au ligament artificiel 16 via le cordage 40, le ligament artificiel 16 se présente sous la forme d'un ressort de raideur variable réglable par champ électromagnétique. Le dispositif d'actionnement 42 est alors configuré pour générer ledit champ électromagnétique de sorte à régler la raideur du ligament artificiel 16, sans modifier sa longueur.

Le moyen de réglage 18 est configuré pour recevoir, pour chaque ligament artificiel 16, un signal de commande associé. Le moyen de réglage 18 est alors configuré pour régler automatiquement la longueur ou la raideur de chaque ligament artificiel 16 en fonction du signal de commande associé.

En d'autres termes, le moyen de réglage 18 est configuré pour faire varier au moins une caractéristique biomécanique de chaque ligament artificiel 16. La caractéristique biomécanique est notamment la longueur du ligament artificiel 16 ou la raideur du ligament artificiel 16.

Par exemple, le signal de commande est une consigne de position à destination du moteur pas-à-pas. Ainsi, en faisant varier le pas du moteur pas-à-pas, le cordon fixe 40 s'enroule plus ou moins autour de l'axe du moteur pas-à-pas et fait donc varier la longueur du ligament artificiel 16 associé, comme visible sur la figure 3.

En variante, le signal de commande est une consigne de raideur à destination du générateur de champ magnétique associé au ressort de raideur variable. Ainsi, en faisant varier le champ magnétique, le moyen de réglage 18 fait donc varier la raideur du ligament artificiel 16 associé.

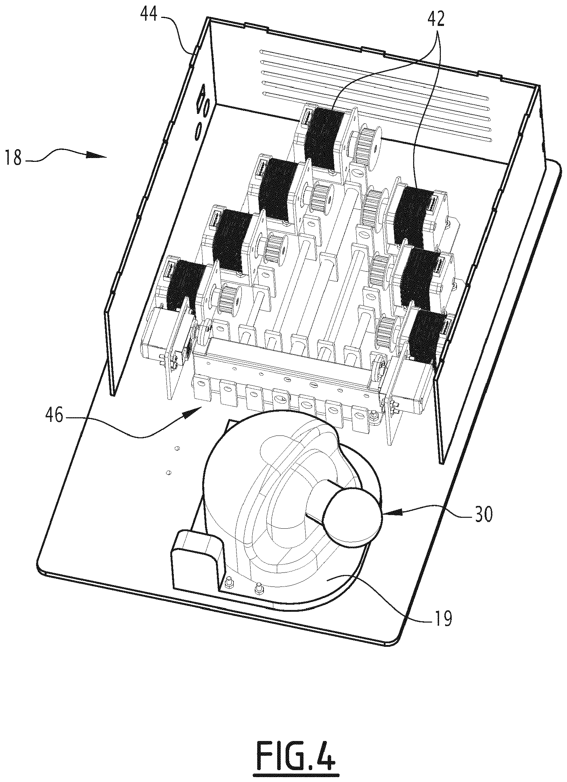

La figure 4 représente sept moteurs pas-à-pas disposés dans un caisson 44 dont la paroi supérieure n'est pas représentée. Les ligaments artificiels 16 et les cordages fixes 40 ne sont également pas représentés ici sur cette figure.

Le moyen de réglage 18 comprend en outre un système de blocage 46 configuré pour maintenir fixe la longueur de chaque ligament artificiel 16 entre les deux points d'ancrage 14 associés.

Le système de blocage 46 permet d'économiser de l'énergie en évitant que les dispositifs d'actionnement 42 aient à maintenir les différents ligaments artificiels 16 en position souhaitée.

En particulier, comme visible sur les figures 3 et 4, le système de blocage 46 comprend un mors 48 actionnable par au moins un dispositif motorisé 50, ici deux dispositifs motorisés 50 comme visibles sur la figure 3. Chaque dispositif motorisé 50 est notamment un servomoteur.

Le mors 48 est propre à être actionné entre une configuration ouverte dans laquelle les ligaments artificiels 16 sont propres à coulisser librement dans le mors 48 et une configuration fermée dans laquelle les ligaments artificiels 16 sont maintenus en position fixe dans le mors 48.

Le mors 48 est notamment composé de deux pièces, chacune dotée de trous permettant le passage des ligaments artificiels 16. Un ou plusieurs ressorts sont disposés entre ces deux pièces. Le servomoteur comprend un embout ovale propre à appuyer sur la pièce du haut de manière à aligner les trous des deux pièces ce qui permet le coulissement des ligaments artificiels 16. Lorsque le servomoteur libère la pression exercée sur la pièce du haut, les trous se désaxent et les ligaments artificiels 16 passant à travers sont bloqués.

Le moyen de réglage 18 et le système de blocage 46 sont propres à être commandés par le système de commande 22.

Le système de commande 22 est configuré pour recevoir une instruction de la part d'un utilisateur du simulateur 10 et pour envoyer au moyen de réglage 18 un signal de commande pour chaque ligament artificiel 16.

Le système de commande 22 comprend par exemple un microcontrôleur par dispositif d'actionnement 42.

Le système de commande 22 est connecté à la base de données 24.

La base de données 24 comporte des données relatives à au moins deux états de genou. Chaque état de genou est caractérisé par une longueur prédéfinie pour chaque ligament artificiel 26 entre les deux points d'ancrage 14. Chaque état de genou est par exemple un état sain, une rupture partielle du ligament croisé antérieur, une rupture totale du ligament croisé antérieur, une lésion du point d'angle postéro-latéral, etc.

En particulier, l'état de genou est caractérisé pour chaque ligament artificiel 16 par une longueur entre les points d'ancrage 14 qui permet de modéliser une éventuelle lésion ligamentaire.

Une lésion ligamentaire est caractérisée par un grade. Le grade 0 correspond à un ligament normal sans blessure. La longueur du ligament artificiel 16 entre les deux points d'ancrage 14 est donc la longueur nominale. Le grade 1 correspond à une entorse, avec douleur et des sensibilités articulaires localisées mais sans laxité. La longueur associée est donc également égale à la longueur nominale, il n'y a pas de modification de la longueur par rapport au grade 0. Le grade 1 peut être associé avec un signal sonore émis lorsque le simulateur 10 est manipulé. Le grade 2 correspond à une déchirure partielle ou complète du ligament avec laxité articulaire. Le grade 2 est également associé à une douleur et des sensibilité localisées. Le grade 2 est associé à un allongement de la longueur du ligament artificiel 16 entre les deux points d'ancrage 14, avantageusement compris entre 5 mm et 10 mm par rapport à la longueur nominale. Enfin, le grade 3 correspond à une déchirure complète du ligament, avec une laxité et une instabilité importantes. Le grade 3 est associé à un allongement de la longueur du ligament artificiel 16 entre les deux points d'ancrage 14, avantageusement supérieur à 10 mm par rapport à la longueur nominale. Un signal sonore peut être également émis lorsque le simulateur 10 est manipulé pour les grades 2 et 3.

Ainsi, à titre d'exemple, lorsque l'état de genou est une rupture totale du ligament croisé antérieur, le ligament artificiel 16 modélisant le ligament croisé antérieur est associé au grade 3 et la longueur associée est donc augmentée de plus de 10 mm. Tous les autres ligaments artificiels 16 sont ajustés à leur longueur nominale.

L'interface homme machine 20 est configurée pour acquérir une instruction associée à l'un des états de genou de la part d'un utilisateur du simulateur 10.

L'interface homme-machine 20 est par exemple un écran tactile. L'écran tactile est propre à afficher différents boutons correspondant aux différents états de genou disponibles. Lorsque l'utilisateur clique sur un bouton, l'instruction associée à l'état de genou sélectionné est envoyée au système de commande 22. A partir de la base de données 24, le système de commande 22 envoie au moyen de réglage 18 un signal de commande pour chaque ligament artificiel 16 correspondant à l'état de genou sélectionné.

Le système de blocage 46 passe de la configuration fermée maintenant les ligaments artificiels 16 en position à la configuration ouverte dans laquelle les ligaments artificiels 16 sont propres à coulisser librement dans le mors 48. Puis, le moyen de réglage 18 modifie la longueur de chaque ligament artificiel 16 entre les deux points d'ancrage 14 en fonction du signal de commande associé reçu, les uns après les autres. Puis, le système de blocage 46 repasse en configuration fermée afin de maintenir les ligaments artificiels 16 en position.

Il est ainsi aisé pour l'utilisateur de passer d'un état de genou à un autre et notamment d'alterner facilement entre un genou sain et un genou pathologique pour permettre une comparaison, ce qui est notamment impossible avec un simulateur conventionnel réglable à la main.

En variante, l'interface homme-machine 20 est un logiciel implémenté sur un ordinateur ou encore un microphone.

Avantageusement, au moins un accéléromètre 26 est fixé à l'un des os artificiels 12. Avantageusement, un accéléromètre 26 est fixé sur chaque os artificiel 12. Chaque accéléromètre 26 est configuré pour mesurer l'accélération de l'os associé au cours du temps et permet donc de déterminer les mouvements effectués par l'utilisateur sur le simulateur 10.

Le simulateur 10 comprend une mémoire configurée pour enregistrer les mesures d'accélération effectuées par chaque accéléromètre 26 au cours du temps. Il est ainsi possible par exemple d'enregistrer lors d'un diagnostic effectué par un étudiant les mouvements et tests effectués par celui-ci sur le simulateur, comme par exemple un test de tiroir antérieur pour diagnostiquer une rupture du ligament croisé antérieur. Ainsi, suite au diagnostic effectué par l'étudiant, il est possible de fournir un rapport qui permet éventuellement de déterminer quels tests n'ont pas été faits, ou pas correctement, par l'étudiant et pouvant éventuellement mener à une erreur de diagnostic.

Avantageusement, le simulateur 10 comprend en outre une enveloppe, non représentée sur les figures. L'enveloppe simule une peau du patient et permet d'entourer les os artificiels 12 et donner un aspect plus réaliste au simulateur 10. L'enveloppe est par exemple constituée d'un matériau plastique déformable aisément.

L'enveloppe définit un volume interne dans lequel sont arrangés les os artificiels. Une mousse remplit le volume interne. La mousse est choisie de sorte à permettre une flexion du genou d'environ 120°.

Avantageusement, au moins un ménisque artificiel est disposé entre deux os artificiels 12. Par exemple, un ménisque latéral artificiel et un ménisque médial artificiel sont amarrés à la surface tibiale et produit à base d'un copolymère.

Avantageusement encore, au moins un muscle artificiel est fixé à deux os artificiels 12. Par exemple, un quadriceps est fixé via le tendon artificiel du quadriceps à la patella artificielle 36 et au point fixe 19. En particulier, le tendon du quadriceps est fixé au pôle supérieur de la patella artificielle et le ligament patellaire est fixé au pôle inférieur de la patella et rejoint le tibia artificiel sur la tubérosité tibiale.

Le simulateur 10 permet de simuler un genou droit ou genou gauche d'un patient en adaptant les fixations des ligaments artificiels 16 sur les os.

Avantageusement, deux simulateurs 10 sont disposés côte à côté, dont un simulateur 10 d'un genou droit et un simulateur d'un genou gauche. Par exemple, l'un des deux simulateurs 10 est dans un état sain et l'autre simulateur 10 est dans un état affecté. L'utilisateur peut alors aisément comparer les deux genoux.

On conçoit ainsi que le simulateur de genou ligamentaire 10 selon l'invention permet bien un réglage précis, aisée et rapide afin de simuler différentes pathologies multi-ligamentaires du genou.

L'invention permet donc une meilleure assimilation des connaissances lors des études médicales et une diminution des risques pour le patient. Le simulateur permet l'apprentissage de l'examen clinique en situation physiologique et pathologique, ainsi que la répétition des manœuvres diagnostiques et l'évaluation des connaissances de chaque étudiant.

De plus, la simulation permet d'exposer les étudiants à des diagnostics rares souvent ignorés dans la situation réelle. Par ailleurs, la réalisation d'un examen clinique performant oriente la prescription des examens complémentaires et réduit le nombre d'examens inutiles, invasifs ou coûteux pour le patient.

## Revendications

1. Simulateur d'articulation ligamentaire (10) comprenant :
- au moins deux os artificiels (12) ;
- pour chaque os artificiel (12), au moins un point d'ancrage (14) sur ledit os artificiel (12) ;
- au moins un ligament artificiel (16), le ou chaque ligament artificiel (16) reliant deux points d'ancrage (14) d'un os artificiel (12) différent ;
- un moyen de réglage (18) relié aux ligaments artificiels (16), le moyen de réglage (18) étant configuré pour faire varier au moins une caractéristique biomécanique de chaque ligament artificiel (16) entre les deux points d'ancrage (14) associés, indépendamment des autres ligaments artificiels (16) ;
**caractérisé en ce que** le moyen de réglage (18) est configuré pour recevoir, pour chaque ligament artificiel (16), un signal de commande associé ;
le moyen de réglage (18) étant configuré pour régler automatiquement la longueur de chaque ligament artificiel (16) en fonction du signal de commande associé.

2. Simulateur selon la revendication 1, dans lequel le simulateur ligamentaire est un simulateur de genou ligamentaire, au moins deux os artificiels (12) étant choisi chacun parmi le groupe composé de : un fémur artificiel (32), un tibia artificiel (34), une patella artificielle (36) et une fibula artificielle (38).

3. Simulateur (10) selon la revendication 1 ou 2, dans lequel au moins deux ligaments artificiels (16) présentent une surface de section transversale différente.

4. Simulateur (10) selon l'une quelconque des revendications précédentes, dans lequel chaque ligament artificiel (16) est composé d'un matériau choisi parmi le groupe constitué de :
- Polypropylène ;
- Polyamide, notamment Nylon ;
- Matériau élastomère ;
- Silicone.

5. Simulateur (10) selon l'une quelconque des revendications précédentes, dans lequel chaque ligament artificiel (16) est composé d'un ressort à raideur variable disposé entre les deux points d'ancrage (14) associés.

6. Simulateur (10) selon l'une quelconque des revendications précédentes, dans lequel le moyen de réglage (18) comprend au moins deux dispositifs d'actionnement (42), notamment au moins deux moteurs pas-à-pas, chaque dispositif d'actionnement (42) étant relié à un unique ligament artificiel (16) et étant configuré pour faire varier la longueur dudit ligament en fonction du signal de commande associé.

7. Simulateur (10) selon l'une quelconque des revendications précédentes, dans lequel le moyen de réglage (18) comprend en outre un système de blocage (46) configuré pour maintenir fixe la longueur de chaque ligament artificiel (16) entre les deux points d'ancrage (14) associés.

8. Simulateur (10) selon la revendication 7, dans lequel le système de blocage (46) comprend un mors (48) actionnable par au moins un dispositif motorisé (50), notamment un servomoteur, le mors (48) étant propre à être actionné entre une configuration ouverte dans laquelle les ligaments artificiels (16) sont propres à coulisser librement dans le mors (48) et une configuration fermée dans laquelle les ligaments artificiels (16) sont maintenus en position fixe dans le mors (48).

9. Simulateur (10) selon l'une quelconque des revendications précédentes, comprenant en outre un support fixe (19), au moins un os artificiel (12) étant relié au support fixe (19) par une liaison rotule (30).

10. Simulateur (10) selon l'une quelconque des revendications précédentes, comprenant en outre une interface homme machine (20), un système de commande (22) et une base de données (24),
la base de données (24) comportant des données relatives à au moins un état de genou, le ou chaque état de genou étant **caractérisé par** une longueur prédéfinie pour chaque ligament artificiel (16) entre les deux points d'ancrage (14) associés;
l'interface homme machine (20) étant configurée pour acquérir une instruction associée à l'un des états de genou de la part d'un utilisateur du simulateur (10) ;
le système de commande (22) étant configuré pour recevoir ladite instruction et pour envoyer au moyen de réglage (18) un signal de commande pour chaque ligament artificiel (16) correspondant à la longueur prédéfinie associée audit état de genou dans la base de données (24).

11. Simulateur (10) selon l'une quelconque des revendications précédentes, comprenant en outre au moins un accéléromètre (26) fixé à l'un des os artificiels (12) et une mémoire configurée pour enregistrer les mesures d'accélération effectuées par chaque accéléromètre (26) au cours du temps.

12. Simulateur (10) selon l'une quelconque des revendications précédentes, comprenant en outre une enveloppe définissant un volume interne dans lequel sont arrangés les os artificiels (12), une mousse remplissant le volume interne.
